# EUROPÄISCHE PATENTSCHRIFT

(11) **EP 0 261 333 B1**
(45) Veröffentlichungstag und Bekanntmachung des Hinweises auf die Patenterteilung: **13.04.1994**
(21) Anmeldenummer: 87110255.4
(22) Anmeldetag: 16.07.1987
(51) Int. Cl.: D04H 3/00, B60R 13/02, B29C 67/14

(54) **Verfahren zum Herstellen eines Verkleidungsteiles sowie danach hergestelltes Verkleidungsteil**
Method for producing a lining element and lining element thus produced
Procédé de fabrication d'un élément de revêtement et élément ainsi fabriqué

(30) Priorität: 28.08.1986 DE 3629222
(43) Veröffentlichungstag der Anmeldung: 30.03.1988
(73) Patentinhaber: EMPE-WERKE ERNST PELZ GmbH & CO. KG, 82538 Geretsried (DE)
(72) Erfinder: Pelz, Peter, D-8192 Geretsried 2 (DE)
(74) Vertreter: Goddar, Heinz J., Dr.

(56) Entgegenhaltungen:
- DE-A- 2 254 006
- DE-A- 3 022 017
- DE-A- 3 225 820
- FR-A- 2 464 859
- GB-A- 1 266 097
- US-A- 4 210 540
- US-A- 4 250 136
- US-A- 4 283 457
- US-A- 4 510 201
- KUNSTOFFBERATER, Band 31, Nr. 4, April 1986, Seiten 36-38, Isernhagen,(Hannover) DE: "Glasfasermattenverstärkte Thermoplaste- Eigenschaften,Verarbeitung und Anwendungen"

## Beschreibung

Die Erfindung betrifft ein Verfahren zum Herstellen eines Verkleidungsteiles, insbesondere eines Abdeckteiles, bei dem ein ein- oder mehrlagiger Faserstoff, der aus Glasfaser-Wirrvlies aus Feinst-Glasfasern hergestellt ist, mit einem aus modifiziertem Polyesterharz oder dergleichen bestehenden Bindemittel beschichtet und mit einer schaummaterialhaltigen Lage verbunden ist.

Ein derartiges Verfahren ist aus der US-A-4 283 457 bekannt. Dort wird die Herstellung eines flexiblen, schwer entflammbaren Schallabsorbers beschrieben, wobei z.B. eine vordere Lage aus Glasfasern und Mineralfasern mit einem schwer entflammbaren Bindemittel bearbeitet und eine hintere Lage aus offenporigem Schaummaterial, Glasfasern und Mineralfasern an die vordere Lage befestigt wird.

Aus der DE-PS 29 37 399 ist ein Verfahren zum Herstellen eines Verkleidungsteiles in Form eines dünnwandigen Verkleidungsteiles für Fahrzeuge der vorstehend beschriebenen Art bekannt, bei dem der Faserstoff, der vorzugsweise einen Gehalt an Acryl- und/oder Polyesterfasern aufweist, nach dem Beschichten mit dem Bindemittel in der Formpresse bei einer Preßtemperatur von 100°C bis 150°C bei einem Preßdruck von 6 bis 10 kg/cm² über eine Preßzeit von 1,5 bis 6 Minuten auf eine Enddicke des Fertigerzeugnisses von 1 bis 2,5 mm zusammengepreßt wird, wobei die vorstehend beschriebenen Verfahrensparameter auch beim erfindungsgemäßen Verfahren in vorteilhafter Weise angewandt werden können.

Ausgehend von dem Stand der Technik gemäß US-A-4 283 457 liegt der Erfindung die Aufgabe Zugrunde ein Verfahren zur Herstellung eines Verkleidungsteils zu schaffen, bei dem in einfacher und kostengünstiger Weise ein Verkleidungsteil mit besonders günstigen akustischen thermischen Isoliereigenschaften herstellbar ist, wobei gleichzeitig eine hervorragende Steifigkeit und daraus resultierende Verformungseigenschaften eingestrebt sind, die auch komplizierten Formanforderungen Rechnung tragen.

Erfindungsgemäß wird diese Aufgabe dadurch gelöst, daß die Glasfaserfließlage(n) zusammen mit mindestens einer schaummaterialhaltigen Lage in Form von Plattenschaum mit einem abdeckenden Faserfließ in die Formpresse eingelegt und alsdann einem Formpreßvorgang unterworfen wird/werden.

Besonders bevorzugte Ausführungsformen der Erfindung ergeben sich aus den Unteransprüchen.

Dem erfindungsgemäßen Verfahren, welches sich im übrigen auch in besonders günstiger Weise für die Realisierung eines Verfahrens eignet, wie es Gegenstand der Patentanmeldung P 36 29230.3(Anwaltsakte PXP 1120, gleicher Anmeldetag) ist, liegt die überraschende Erkenntnis zugrunde, daß es gelingt, optimale Festigkeitseigenschaften bei besonders geringem spezifischen Gewicht des Verkleidungsteiles zu erzielen, wenn als Faserstoffmaterial ein dünnstfaseriges Glasfaser-Wirrvlies verwendet wird. Bei geringstmöglicher Dicke des Verkleidungsteiles ergeben sich hierdurch bereits eine hervorragende Steifigkeit und daraus resultierende Verformungseigenschaften, die es ermöglichen, auch komplizierten Formanforderungen Rechnung zu tragen. Durch die Kombination des Glasfaser-Verkleidungsteils mit einer Schaumplattenauflage ergeben sich durch die hierdurch verwirklichte Trennung des Gesamt-Verkleidungsteiles in einen formstabilen Träger auf Glasfaserbasis einerseits und eine Dämmauflage, ein- oder beidseitig, aus einer Schaumplatte andererseits zusätzlich zu den hervorragenden Festigkeitseigenschaften auch glänzende thermische und akustische Isoliereigenschaften, wobei die vorbeschriebene "Aufteilung" der Funktionen auf die verschiedenen Lagen es ermöglicht, einerseits die auf Glasfaserbasis hergestellte Lage, zum anderen die Schaumplattenauflage je nach Festigkeits- und Isoliergesichtspunkten zu optimieren. Natürlich beziehen sich die beanspruchten Dichteangaben etc. im Falle der Verwendung einer Schaumplattenauflage lediglich auf die Glasfaser-lage(n).

Weitere Verbesserungsmöglichkeiten der Steifigkeit und der thermischen und akustischen Isoliereigenschaften ergeben sich, wenn die Wirkung der Schaumplattenauflage dadurch verdoppelt wird, daß zu beiden Seiten der Glasfaserlage je eine Schaumplatte angeordnet und die Schichtung wahlweise ein- oder beidseitig durch eine Dekor- oder Faserstoffauflage abgedeckt wird.

Die Erfindung betrifft also mit anderen Worten die Herstellung einer beschichteten Platte für Abdeckungen und Verkleidungen, die sehr gute Dämmeigenschaften gegen Wärme und Schall besitzt, wenig Feuchtigkeit aufnimmt und gute Festigkeitseigenschaften hat, dabei leicht ist und die Möglichkeit gibt, in besonders vorteilhafter Weise in den Formpreßvorgang das Anbringen der Befestigungselemente für eine Verkleidung zu integrieren. Gegenüber den bekannten Schichtkörpern dieser Art, die konstruktiv in der Beschichtung Mängel aufweisen und auch in der Formsteifigkeit unbefriedigend sind, wodurch das Handhaben beim Einbau großflächiger Werkstücke erschwert wird, vermeidet das nach der Erfindung hergestellte Verkleidungsteil die Mängel bisher angewendeter Konstruktionen und besitzt eine ganze Reihe von Vorteilen gegenüber den bisher angewendeten Abdeckungen und Verkleidungen ähnlicher Art, wobei die Herstellung des Verkleidungsteiles nach der Erfindung wenig arbeitsaufwendig ist. In besonders vorteilhafter Weise weist der nach der Erfindung hergestellte Schichtstoff eine Schaumplattenauflage mit einer Dicke von etwa 3 bis 30 mm auf, ferner eine Glasfaserschicht, die auf der der Schaumplatte abgewandten Seite wahlweise mit einem Faservlies abgedeckt ist. Die Glasfaserschicht und das Faservlies werden einseitig vorzugsweise mit ungesättigtem Polyesterharz beschichtet und mit der Schaumplattenauflage im Formpreßverfahren, analog dem bekannten Preßverfahren zur Herstellung von Fasermattenerzeugnissen, in einem einzigen Arbeitsvorgang miteinander zu einem Schichtkörper verbunden.

Die so hergestellte Konstruktion hat insbesondere die nachfolgenden, den bekannten Schichtstoffen ähnlicher Art gegenüberstehenden Vorteile: Sie hat eine sehr gute akustische Absorption, großes Wärmedämmvermögen und nur geringe Feuchtigkeitsaufnahme. Es entsteht ein dimensions- und formstabiles Werkstück auch bei übergroßen Verkleidungsteilen, wodurch die Montagearbeiten solcher Teile wesentlich erleichtert werden. Ermöglicht wird die Stabilität und Formtreue durch die große Rückstellkraft des Schnittschaumes und die mehrlagige Beschichtung. Die Formstabilität wird durch das die Konstruktion tragende, mit Kunstharz ausgehärtete Faservlies gewährleistet und kann noch durch eingepreßte sickenartige oder verdichtete Bahnen gesteigert werden. Das bei der bevorzugten Ausführungsform der Erfindung die Schicht wahlweise abdeckende aushärtende Faservlies schützt die Glasfaserschicht gegen Abrieb und gibt dem fertigen Werkstück eine griffige Oberfläche. Außerdem ermöglicht das Faservlies, analog dem Verfahren nach DE-OS 32 25 820, auf dem Verkleidungsteil anzubringende Befestigungsteile für Verkleidungen in Formpreßverfahren in situ in das Verkleidungsteil zu integrieren. Die Konstruktion gestattet außerdem, Verdichtungen in kleineren oder größeren Bereichen der Fläche und/oder an den Rändern der Verkleidungen durch Tiefpressen flache dauerhafte Zonen zu schaffen, die an den Rändern als Befestigungslaschen oder Anschlußstellen für Verkleidungsteile dienen. Durch den einzigen erforderlichen Formpreßvorgang ist die Herstellung des erfindungsgemäßen Verkleidungsteiles wenig arbeitsaufwendig.

Beim erfindungsgemäßen Verfahren wird in besonders vorteilhafter Weise eine unter allergologischen, gesundheitlichen Gesichtspunkten unbedenkliche Glasfaservlieszusammensetzung verwendet, die durch die Abdeckung mit Faservlies noch erhöht wird. In solchen Bereichen des herzustellenden Verkleidungsteiles, bei denen der Preßdruck nicht sonderlich groß ist, bleiben die lockeren Eigenschaften der Schaumauflage im vollen Umfang erhalten, wobei also kein Eindringen des Kunstharzbindemittels aus dem Glasfaservlies erfolgt. Dort hingegen, wo eine starke Verdichtung des Verkleidungsteiles durch entsprechende Gestaltung des Formpreßwerkzeuges erfolgt, dringt das Bindemittel aus der Glasfasermatte beim Formpreßvorgang in die Schaumauflage ein und verfestigt diese in der gewünschten Enddicke. Das nach der Erfindung hergestellte Verkleidungsteil hat einen weichen, "softigen" Griff, ist ausgezeichnet maßhaltig und bietet freie Kaschiermöglichkeiten, ohne Verwendung von Zwischenfolien, für Dekorschichten und dergleichen, wobei unausgerüstete Kaschierstoffe in kostengünstiger Weise verwendet werden können. Ggf. ist es auch möglich, Filmscharniere bzw. ganz allgemein Sollbiegebereiche zur Herstellung beweglicher Platten etc. an dem Verkleidungsteil im Formpreßvorgang anzubringen, wodurch die Montagemöglichkeit weiter gefördert wird. Auch eine ein- oder beidseitige Profilierung des Verkleidungsteiles ist ohne weiteres durch entsprechende Formgebung des Formpreßwerkzeuges möglich.

Weitere Merkmale und Vorteile der Erfindung ergeben sich aus den Ansprüchen und aus der nachstehenden Beschreibung, in der Ausführungsbeispiele anhand der schematischen Zeichnung im einzelnen erläutert sind. Dabei zeigt:
- Fig. 1: ein Ausführungsbeispiel eines Verkleidungsteiles nach der Erfindung im Schnitt;
- Fig. 2: ein weiteres Ausführungsbeispiel der Erfindung in ähnlicher Schnittdarstellung wie Fig. 1, also senkrecht zur Flächenebene mit tiefgepreßter Randzone;
- Fig. 3: ein weiteres Ausführungsbeispiel der Erfindung, in Schnittdarstellung wie Fig. 1 und 2 mit einer zusätzlichen Dekorauflage, und
- Fig. 4: ein weiteres Ausführungsbeispiel der Erfindung, in Schnittdarstellung wie Fig. 1 bis 3 mit je einer Lage Plattenschaum beiderseits der Glasfaserschicht mit nur einer abdeckenden Dekorschicht.

Bei dem erfindungsgemäßen Verfahren wurde bei einem bevorzugten Ausführungsbeispiel in der nachstehend beschriebenen Weise vorgegangen:

Ein dünnstfaseriges Glasfaser-Wirrvlies mit einem Gewicht von 600 g/m² wurde beidseitig mit einer Menge von insgesamt 800 g/m² Polyesterharz beschichtet. Anschließend wurde das so beschichtete Glasfaservlies zusammen mit einer Plattenschaumlage, mit einer Dicke von 6 mm und einem Faservlies abgedeckt in eine Formpresse eingelegt und bei 145°C fünf Minuten formgepreßt. Es wurde ein Verkleidungsteil erhalten, welches sowohl ausgezeichnete Festigkeitseigenschaften als auch - bedingt durch die Plattenschaumauflage - hervorragende Wärme- und Schalldämmwerte besaß, wobei durch die Verwendung der Schaumplattenauflage in vorteilhafter Weise keine Feuchtigkeit eindringen konnte und das Teil auf der der Glasfaser abgewandten Seite ein weiches Griffverhalten zeigt.

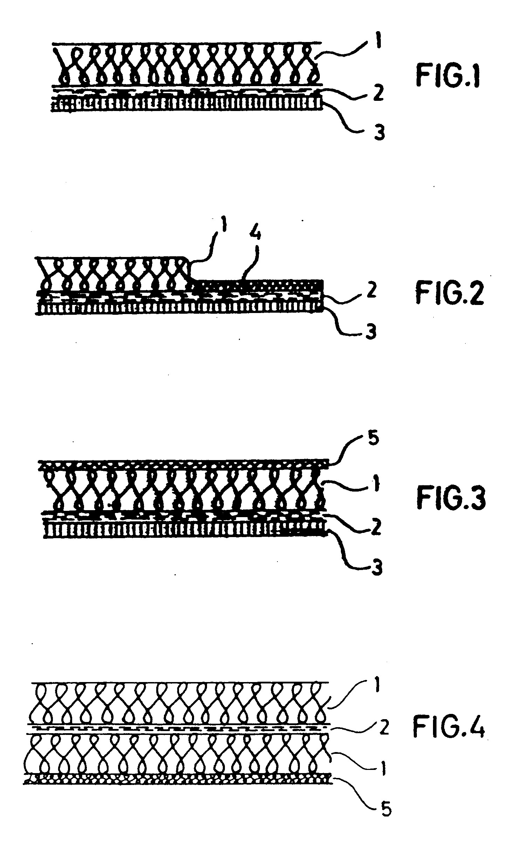

Fig. 1 zeigt ein Ausführungsbeispiel der Erfindung, bei dem eine Schaumplattenauflage 1 mit einer Glasfaserschicht 2 und einem diese abdeckenden Faservlies 3 verbunden ist.

Bei dem Ausführungsbeispiel von Fig. 2 ist zusätzlich zu dem Aufbau aus der Schaumplatte 1, Glasfaser-schicht 2 und Faservlies 3 von Fig. 1 bei 4 eine durch Tiefpressen geschaffene dauerhafte feste und halbfeste Zone wiedergegeben.

Bei Fig. 3 sind wiederum die bereits beschriebene Schaumplattenlage 1, die Glasfaserschicht 2 und das Faservlies 3 wiedergegeben, wobei zusätzlich eine Dekordeckschicht 5 vorgesehen ist.

Bei Figur 4 sind beidseits an der Glasfaser 2 je eine Schaumplattenlage 1 angeordnet und zur Abdeckung eine Dekorschicht 5 vorgesehen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Herstellen eines Verkleidungsteils, insbesondere eines Abdeckteils, bei dem ein ein- oder mehrlagiger Faserstoff, der aus Glasfaser-Wirrvlies aus Feinst-Glasfasern hergestellt ist, mit einem aus modifiziertem Polyesterharz oder dergleichen bestehenden Bindemittel beschichtet und mit einer schaummaterialhaltigen Lage verbunden ist, dadurch gekennzeichnet, daß die Glasfaservlieslage(n) zusammen mit mindestens einer schaummaterialhaltigen Lage in Form von Plattenschaum mit einem abdeckenden Faservlies in die Formpresse eingelegt und alsdann einem Formpreßvorgang unterworfen wird/werden.

2. Verfahren nach Anspruch 1, dadurch gekennzeichnet, daß als Faserstoffmaterial ein Glasfaservlies mit einem Gewicht von 200 bis 800 g/m² verwendet wird.

3. Verfahren nach Anspruch 1 oder 2, dadurch gekennzeichnet, daß für die Schaumplattenauflage ein Polyester- oder Polyetherurethanschaum verwendet wird.

4. Verfahren nach Anspruch 1 bis 3, dadurch gekennzeichnet, daß eine offenporige Schaumplattenauflage verwendet wird.

5. Verfahren nach Anspruch 1 bis 3, dadurch gekennzeichnet, daß eine geschlossenporige Schaumplattenauflage verwedet wird.

6. Verfahren nach einem der vorangegangenen Ansprüche, dadurch gekennzeichnet, daß ein Schaummaterial mit einer Dichte von 20 bis 60 kg/m³ verwendet wird.

7. Verfahren nach einem der vorangegangenen Ansprüche, dadurch gekennzeichnet, daß ein Schaummaterial mit einer Dicke von 3 bis 30 mm verwendet wird.

8. Verfahren nach einem der vorangegangenen Ansprüche, dadurch gekennzeichnet, daß die Glasfaserlage auf der dem Schaummaterial abgewandten Seite mit einer mit Kunstharzbindemittel beschichteten Faservliesmatte abgedeckt und mit dieser im Formpreßvorgang verklebt wird.

9. Verfahren nach einem der vorangegangenen Ansprüche, dadurch gekennzeichnet, daß zu beiden Seiten der Glasfaserlage je eine Schaumplattenauflage angeordnet ist und der ganze Schichtkörper einseitig mit einer Dekorschicht abgedeckt ist.

10. Verfahren nach einem der vorangegangenen Ansprüche, dadurch gekennzeichnet, daß auf beiden Seiten der Glasfaserlage je eine Schaumplattenauflage angeordnet ist und der ganze Schichtkörper beidseitig mit einer Dekorschicht abgedeckt ist.

11. Verfahren nach einem der vorangegangenen Ansprüche, dadurch gekennzeichnet, daß beim Formpressen formbeständige Einsenkungen in der Fläche in kleineren oder größeren Bereichen vorgenommen werden.

12. Verfahren nach einem der vorangegangenen Ansprüche, dadurch gekennzeichnet, daß an den Verkleidungsteilrändern durch Tiefpressen feste, flache Zonen geschaffen werden, die als Befestigungslaschen, Anschlußstellen oder dergleichen dienen.

13. Verfahren nach einem der vorangegangenen Ansprüche, dadurch gekennzeichnet, daß in der Fläche insbesondere bei der Herstellung großformatiger Verkleidungsteile sickenartige Bahnen zur Erhöhung der Formsteifigkeit eingepreßt werden.

14. Verfahren nach einem der Ansprüche 1 bis 8, dadurch gekennzeichnet, daß auf eine offenliegende Seite der Schaumauflage(n) eine Dekorschicht aufgebracht wird.

15. Verfahren nach Anspruch 14, dadurch gekennzeichnet, daß die Dekorschicht im einzigen Formpreßvorgang aufgebracht wird.

16. Verfahren nach Anspruch 14, dadurch gekennzeichnet, daß nach Abschluß des der Herstellung des Verkleidungsteiles dienenden Formpreßvorganges die Dekorschicht in einem besonderen Arbeitsgang aufgeklebt wird.

17. Verfahren nach einem der Ansprüche 1 bis 15, dadurch gekennzeichnet, daß in das Verkleidungsteil in dem Formpreßvorgang ein/mehrere Befestigungsteil(e) in situ eingepreßt wird/werden.

18. Verfahren nach einem der vorangegangenen Ansprüche, dadurdch gekennzeichnet, daß auf eine offenliegende Seite der Schaumplattenauflage(n) eine vorzugsweise feuchtigkeitsabweisende Schutzschicht aufgetragen wird.

## Claims

1. A method of producing a lining element, more particularly a covering element, in which a single or multi-layer fibre material made from a random-orientation glass fibre web consisting of ultra-fine glass fibres, is coated with a binder consisting of modified polyester resin or the like and is connected to a layer which contains foam material, characterised in that the glass fibre web layer or layers are placed in the moulding press together with at least one layer which contains foam material and which is in the form of a foam sheet with a covering fibre web, and is/are then subjected to a moulding operation.

2. A method according to claim 1, characterised in that the fibre material is a glass fibre web of a weight of 200 to 800 g/m².

3. A method according to claim 1 or 2, characterised in that a polyester or polyetherurethane foam is used for the foam sheet layer.

4. A method according to claims 1 to 3, characterised in that an open-pore foam sheet layer is used.

5. A method according to claims 1 to 3, characterised in that a closed-pore foam sheet layer is used.

6. A method according to any one of the preceding claims, characterised in that the foam material used has a density of from 20 to 60 kg/m³.

7. A method according to any one of the preceding claims, characterised in that the foam material used has a thickness of from 3 to 30 mm.

8. A method according to any one of the preceding claims, characterised in that the glass fibre layer is covered, on the side remote from the foam material, by a fibre web mat coated with synthetic resin binder, and is stuck to said mat in the moulding operation.

9. A method according to any one of the preceding claims, characterised in that a foam sheet layer is disposed on either side of the glass fibre layer and the entire laminate is covered with a decorative layer on one side.

10. A method according to any one of the preceding claims, characterised in that a foam sheet layer is disposed on either side of the glass fibre layer and the entire laminate is covered with a decorative layer on both sides.

11. A method according to any one of the preceding claims, characterised in that depressions of a stable shape are made in the surface in smaller or larger zones during the moulding operation.

12. A method according to any one of the preceding claims, characterised in that firm flat zones are produced at the edges of the lining element by deep-pressing and serve as fixing strips, junction points or the like.

13. A method according to any one of the preceding claims, characterised in that paths after the style of corrugations are moulded in the surface in order to increase shape rigidity, particularly in the production of large-format lining elements.

14. A method according to any one of claims 1 to 8, characterised in that a decorative layer is applied to an exposed side of the foam layer or layers.

15. A method according to claim 14, characterised in that the decorative layer is applied in the single moulding operation.

16. A method according to claim 14, characterised in that the decorative layer is stuck on in a separate operation on completion of the moulding operation for the production of the lining element.

17. A method according to any one of claims 1 to 15, characterised in that one or more fixing elements are moulded in in situ in the lining element in the moulding operation.

18. A method according to any one of the preceding claims, characterised in that a preferably moisture-repellent protective layer is applied to an exposed side of the foam sheet layer or layers.

## Revendications

1. Procédé de fabrication d'une pièce de garniture, notamment une pièce de revêtement, selon lequel un matériau en libres en une ou plusieurs couches, fabriqué en non tissé de libres de verre à base de libres de verre ultra-fines, est revêtu d'un liant composé de résine polyester modifiée ou analogue, et est relié à une couche renfermant un matériau en mousse, caractérisé en ce que la ou les couche(s) de non tissé de libres de verre est/sont déposée(s) dans la presse de moulage, en commun avec au moins une couche renfermant un matériau en mousse sous la forme de mousse en plaque et un non tissé de libres de recouvrement, et est/sont alors soumise(s) à une opération de moulage par compression.

2. Procédé selon la revendication 1, caractérisé en ce que le matériau en libres utilisé est un non tissé de libres de verre d'un poids de 200 à 800g/m².

3. Procédé selon la revendication 1 ou 2, caractérisé en ce que pour la couche de recouvrement de mousse en plaque, on utilise une mousse de polyester ou de polyuréthanne.

4. Procédé selon la revendication 1 à 3, caractérisé en ce que l'on utilise une couche de recouvrement de mousse en plaque à cellules ouvertes.

5. Procédé selon les revendications 1 à 3, caractérisé en ce que l'on utilise une couche de recouvrement de mousse en plaque à cellules fermée.

6. Procédé selon l'une des revendications précédentes, caractérisé en ce que l'on utilise un matériau de mousse d'une densité de 20 à 60 kg/m³.

7. Procédé selon l'une des revendications précédentes, caractérisé en ce que l'on utilise un matériau de mousse d'une épaisseur de 3 à 30 mm.

8. Procédé selon l'une des revendications précédentes, caractérisé en ce que la couche de fibres de verre, sur le côté opposé à celui où se trouve le matériau de mousse, est recouvert d'un mat de non tissé de fibres revêtu d'un liant de résine synthétique, et est collé sur celui-ci au cours de l'opération de moulage par compression.

9. Procédé selon l'une des revendications précédentes, caractérisé en ce que sur chacun des deux côtés de la couche de fibres de verre, est disposée une couche de recouvrement de mousse en plaque, et l'ensemble du corps stratifié est recouvert d'un côté, d'une couche de décoration.

10. Procédé selon l'une des revendications précédentes, caractérisé en ce que sur chacun des deux côtés de la couche de fibres de verre, est disposée une couche de recouvrement de mousse en plaque, et l'ensemble du corps stratifié est recouvert des deux côtés, d'une couche de décoration.

11. Procédé selon l'une des revendications précédentes, caractérisé en ce que lors du moulage par compression, on réalise des empreintes en creux dans la surface, sur des zones plus ou moins grandes.

12. Procédé selon l'une des revendications précédentes, caractérisé en ce que sur les bords de la pièce de garniture, sont réalisées par écrasement, des zones plates résistantes, qui font office de languettes de fixation, de points de raccordement ou analogues.

13. Procédé selon l'une des revendications précédentes, caractérisé en ce que dans la surface, notamment dans le cas de la fabrication de pièces de garniture de grand format, sont formées par compression, des bandes en forme de moulure destinées à augmenter la rigidité de forme.

14. Procédé selon l'une des revendications 1 à 8, caractérisé en ce que sur le côté libre de la ou des couche(s) de recouvrement de mousse est appliquée une couche décorative.

15. Procédé selon la revendication 14, caractérisé en ce que la couche décorative est appliquée au cours de l'unique opération de moulage par compression.

16. Procédé selon la revendication 14, caractérisé en ce qu'après la fin de l'opération de moulage par compression servant à fabriquer la pièce de garniture, la couche décorative est appliquée par collage au cours d'une opération particulière.

17. Procédé selon l'une des revendications 1 à 15, caractérisé en ce qu'au cours de l'opération de moulage par compression, une ou plusieurs pièce(s) de fixation est ou sont intégrée(s) in situ dans la pièce de garniture.

18. Procédé selon l'une des revendications précédentes, caractérisé en ce que sur un côté libre de la ou des couche(s) de recouvrement de mousse en plaque, est appliquée une couche de protection, de préférence hydrofuge.
